# EUROPEAN PATENT APPLICATION

(11) **EP 2 239 832 A1**
(43) Date of publication of application: **13.10.2010**
(21) Application number: 09157408.7
(22) Date of filing: 06.04.2009
(51) Int. Cl.: H02K 11/00

(54) **Motor and method of operating a motor**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

It is provided a motor (10) and a method of operating a motor (10), particularly for household devices, comprising a housing (20) for housing a rotor (14) and a stator (16), an electrical power circuit (18) for applying an electrical power to the stator (16) and/or the rotor (14), a cutoff element (30) for interrupting or limiting the electrical power circuit (18), if an current applied to the electrical power circuit (18) exceeds a predefined current threshold, and a temperature sensor (26) for detecting the temperature of the housing (20), wherein the temperature sensor (26) is connected to the electrical power circuit (18) such that the electrical power circuit (18) is interrupted or limited, if the temperature of the housing (20) exceeds a predefined temperature threshold. Due to the combination of the temperature sensor (26) for detecting the temperature of the housing (20) of the motor (10) and the cutoff element (30) for preventing a too high current the risk of damaging the motor (10) can be reduced, wherein the risk of unnecessary protection actions can be reduced at the same time.

## Description

### FIELD OF THE INVENTION

The invention relates to the field of motors as well as methods of operating a motor, wherein such kind of a motor can be used particularly for household devices, like hand mixers, food processors, electrical tooth brushes and the like.

### BACKGROUND OF THE INVENTION

Usually household devices are operated for a comparatively short period of time. For that reason household devices comprises usually a motor, which is designed for a large number of separate short periods of operation. In the case that a household device is operated for a longer period of time there is a risk that the motor may malfunction, for instance due to an overheating of the motor. For example food processors or kitchen mixers could be provided with a stand, which are able to operate without being hold in a hand of user. In the case that the user forgets to stop such kind of a self operated household device, a high risk of overheating the motor even at a low power is present.

From US 6,690,138 B2 it is known to provide a temperature sensor for indirect sensing the temperature of a motor. The temperature sensor is provided on a printed circuit board, which is adapted for monitoring the output torque of the motor. The printed circuit board is encapsulated by an aluminum board case and arranged adjacent to the motor outside a housing of the motor. The temperature sensor detects the ambient temperature inside the board case. On the basis of the detected temperature and the actual electric current applied to the motor the temperature of the motor is calculated. For preventing the motor from overheating the electric current can be limited.

It is a disadvantage of such kind of a motor that the temperature monitoring is too slow. There are several situations, where the temperature of the motor may be too high, wherein at the same time the detected temperature is comparatively very low. For instance in the case of a locked rotor of the motor the temperature of the motor increases very fast, wherein the increase of the motor temperature cannot be monitored by the temperature sensor of the printed circuit board. This increases the risk of damaging the motor. Further the decision of limiting the current applied to the motor have to be triggered very conservative, since a temperature difference between the motor and the temperature sensor is present. This leads to a limitation of the current even in cases, when the motor temperature is in fact not too high, for instance at longer operations of the motor at low power. This increases the risk of unnecessarily protection actions.

### SUMMARY OF THE INVENTION

It is an object of the invention to provide a motor as well as a method of operating a motor, by which the risk of damaging the motor can be reduced, wherein the risk of unnecessary protection actions can be reduced at the same time.

This object is achieved by a motor particularly for household devices, comprising a housing for housing a rotor and a stator, an electrical power circuit for applying an electrical power to the stator and/or the rotor, a cutoff element for interrupting or limiting the electrical power circuit, if an current applied to the electrical power circuit exceeds a predefined current threshold, and a temperature sensor for detecting the temperature of the housing, wherein the temperature sensor is connected to the electrical power circuit such that the electrical power circuit is interrupted or limited, if the temperature of the housing exceeds a predefined temperature threshold.

Due to the cutoff element a fast increase of the motor temperature, this means the temperature of the rotor and/or stator, can be detected. In the case of a blocking rotor a high increase of the current occurs, wherein an excess of the predefined current threshold can be detected by the cutoff element. The cutoff element can be particularly designed as thermal fuse, thermal link, thermal cutoff ("TCO"), bimetal connector or the like. Even too heavy applications, which may lead to a too high applied power, can be handled by the cutoff element before an overheating can be detected by the temperature sensor. For instance when a motor control tries to increase the applied current for maintaining a particular output speed, the applied current may exceed a maximum current, when the rotor works against a high resistance, like mixing a tough-flowing mixture by means of a small hand mixer. In such situations the cutoff element can interrupt the electrical power circuit or limit the current of the electrical power circuit. A too high current can be prevented by means of the cutoff element, reducing the risk of damaging the motor by overheating. At the same time the provided temperature sensor do not detect a temperature outside the motor but the temperature of the housing of the motor. Since the temperature of the motor housing is detected, a cooling influence by convection to the detected temperature can be reduced. Since the convection conditions depends strongly on the actual use of the device comprising the motor, the convection conditions it cannot be calculated in advance in most cases. By detecting the temperature of the housing and not a temperature, which may be subjected to higher convection effects, the detected temperature corresponds better to the actual temperature of the motor. Further additional thermal conduction resistances are prevented leading to a smaller temperature difference between the detected temperature of the housing and the temperature of the rotor and/or stator. Since the conditions inside the housing are mainly not influenced by ambient conditions outside the housing, the heat flux between the rotor and/or stator and the housing can be calculated in advance with a high precision. The predefined temperature threshold can be selected less conservative, so that the temperature sensor can interrupt the electrical power circuit or limit the current of the electrical power circuit at a higher detected temperature. During longer operations of the motor the risk of damaging the motor by overheating can be reduced, wherein at the same time the risk of unnecessary protection actions can be reduced. Particularly the risk that a household device like a food processor or a kitchen mixer, which may be provided with a stand, may overheat even at low power in the case that the user forgets to stop such kind of a self operated household device is reduced. Since both the temperature sensor and the cutoff element are connected to the same electrical power circuit, it is sufficient when one of the temperature sensor and the cutoff element detects an exceeding threshold. The temperature sensor can interrupt the electrical power circuit or limit the current of the electrical power circuit independently from the cutoff element or vice versa.

Particularly the temperature threshold is selected such, that a temperature of the rotor and the stator is below a given temperature limit of the rotor and the stator, when thermal heat conduction from the stator and the rotor to the temperature sensor via the housing is taken into account. Preferably the selected temperature threshold is based on a calculation calculated at a mainly constant applied electrical power. Since the temperature sensor detects the temperature of the housing of the motor, the effect of heat convection to the detected temperature is very low and can be neglected in a lot of cases. For example the temperature of the housing can be detected by detecting the infrared emission of the housing. Thus, the predefined temperature threshold can be calculated in advance mainly based on heat conduction. In one calculated example regarding a mixer it was found out, that the temperature on the outer surface of the housing is nearly half the temperature of the average temperature of the rotor and stator.

Preferably the temperature sensor and the cutoff element are connected to the electrical power circuit in an OR-logic manner for interrupting or limiting the electrical power circuit. Due to the OR-logic it is safeguarded, that the temperature sensor and the cutoff element are able to interrupt the electrical power circuit or limit the current of the electrical power circuit independently from each other. Particularly only one switch is provided for interrupting or limiting the electrical power circuit, wherein the switch is particularly operated by an OR-logic element connected to the temperature sensor as well as to the cutoff element. For instance the temperature sensor can be connected to a first input of the OR-logic element and the cutoff element can be connected to a second input of the OR-logic element, wherein an output of the OR-logic element can be connected to one switch, which initiates an interruption of the electrical power circuit or a limitation of the applied current of the electrical power circuit. This leads to a very simple wiring, since the OR-logic element can be reduced to a single connection node.

In a preferred embodiment the temperature sensor is in direct contact to the housing, wherein the temperature sensor is particularly in plane contact to the housing. Due to the direct contact between the temperature sensor and the housing additional layers, which may increase the thermal heat resistance between the rotor and/or stator to the temperature sensor, can be omitted. Particularly the temperature sensor may comprise one or more legs, which are inserted into the housing, wherein the legs comprise higher heat conductivity than the material of the housing. By means of the at least one leg the temperature inside the housing can be detected.

Particularly the housing comprises a cavity by which the temperature sensor is at least partially received. Due to the cavity the temperature sensor is able to monitor a temperature closer to the rotor and/or stator than at the outer surface of the housing. The temperature sensor can detect a temperature inside the housing. Preferably the cavity is filled by a heat conductive filling material like epoxy resin. Particularly the whole temperature sensor is covered by the filling material, so that no convection occurs on a surface of the temperature sensor. Due to the filling material it is safeguarded that the temperature sensor detects a temperature inside the housing, where mainly no substantial convective cooling effect is present.

In a further embodiment the housing comprises an inner surface pointing to the rotor and an outer surface pointing away from the rotor, wherein the temperature sensor is placed on the outer surface and/or on the inner surface. By positioning the temperature sensor on a mainly flat surface a plane contact can be provided leading to good heat conduction. If so, the contact between the temperature sensor and the housing can be performed or supported by an adhesive comprising good thermal conductivity, like synthetic resin or epoxy resin, each loaded with approximately 65% by volume finely ground metal powder of for instance aluminum.

Preferably the temperature sensor is arranged on the housing at a geodetically higher level than most part of the housing. Due to this arrangement of the temperature sensor on a comparatively high level, the temperature can be positioned at a place, where the highest temperature of the housing can be expected taking natural convection inside the housing into account.

Particularly the temperature sensor is arranged mainly in the middle of the rotor and/or the stator in axial direction and/or arranged mainly in the middle of the rotor and/or the stator in radial direction. Since the temperature sensor may be positioned mainly centrally with respect to the rotor and the stator, the temperature can be positioned at a place, where the highest temperature is expected during operation. The temperature sensor is particularly arranged in the middle of the rotor and/or the stator in radial direction of only one plane and arranged spaced to a middle axis of the rotor and the stator in radial direction of a plane mainly orthogonal to the previous plane. The temperature sensor can be particularly arranged spaced higher to the middle axis with respect to gravity direction.

In a preferred embodiment the temperature sensor and the cutoff element are spaced to each other such that during operation of the motor the relation of a heat flux *Q̇_{c}* from the cutoff element to the temperature sensor and a heat flux *Q̇_{M}* from the stator and the rotor to the temperature sensor is *Q̇_{c}*/*Q̇_{M}* ≤ 0.1, particularly *Q̇_{c}*/*Q̇_{M}* ≤ 0.01, preferably *Q̇_{c}*/*Q̇_{M}* ≤ 0.001, and most preferred *Q̇_{c}*/*Q̇_{M}* ≤ 0.0001. The heat flux from the cutoff element for example via the electric power circuit to the temperature sensor can be neglected. A substantial thermal influence of the temperature detection of the temperature sensor via the provided wiring can be prevented. Since the heat flux from the cutoff element to the temperature sensor provides mainly no influence to the temperature detection, the calculation of a suitable temperature threshold for the temperature sensor is simplified.

Preferably the temperature sensor and/or the cutoff sensor is/are of a self holding type for interrupting or limiting the electrical power circuit during a predetermined minimum period of time. Since the interruption of the electrical power circuit or the limitation of the current of the electrical power circuit is provided for the predetermined minimum period of time, a minimum cooling time is safeguarded. It can be prevented, that the motor starts and stops several times in short intervals.

The invention further relates to a household device, particularly hand mixer, food processor or electrical tooth brush, comprising a motor, which may be designed as previously described, for operating a moveable part, wherein the applicable electrical power to the motor is particularly variable by a user. Due to the combination of the temperature sensor for detecting the temperature of the housing of the motor and the cutoff element for preventing a too high current the risk of damaging the motor can be reduced, wherein the risk of unnecessary protection actions can be reduced at the same time.

The invention further relates to a method of operating a motor, which is particularly designed as previously described, wherein an electrical power circuit for operating the motor is interrupted or limited, if an exceeding of a current of the electrical power circuit above a predetermined current threshold is detected, as well as the electrical power circuit is interrupted or limited, if an exceeding of a temperature of a housing for a rotor and a stator of the motor above a predetermined temperature threshold is detected. Due to the combination of the temperature sensor for detecting the temperature of the housing of the motor and the cutoff element for preventing a too high current the risk of damaging the motor can be reduced, wherein the risk of unnecessary protection actions can be reduced at the same time. The method can be further performed as previously described with respect to the motor.

Particularly the temperature threshold is selected such, that a temperature of the stator and the rotor is below a given temperature limit of the rotor and the stator, when thermal heat conduction from the stator and the rotor to the temperature sensor via the housing is taken into account, wherein the selected temperature threshold is particularly based on a calculation calculated at a mainly constant applied electrical power. Since the temperature sensor detects the temperature of the housing of the motor, the effect of heat convection to the detected temperature is very low and can be neglected in a lot of cases. Thus, the predefined temperature threshold can be calculated in advance mainly based on heat conduction.

### BRIEF DESCRIPTION OF THE DRAWINGS

These and other aspects of the invention will be apparent from and elucidated with reference to the embodiment described hereinafter.

In the drawings:

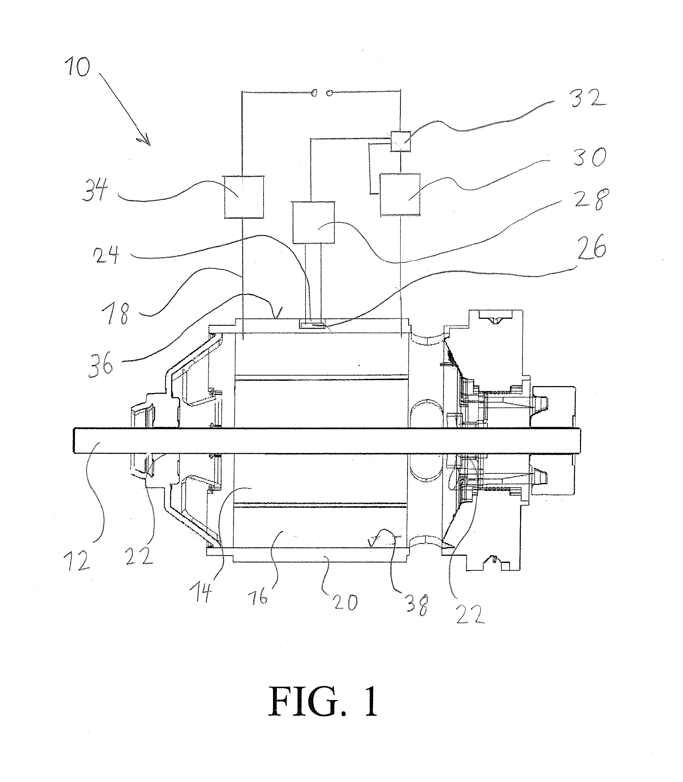

Figure 1 is a schematic cross sectional view of a motor according to the invention.

### DETAILED DESCRIPTION OF EMBODIMENTS

The motor 10 illustrated in Fig. 1 comprises a shaft 12, which may be connected to a not illustrated moving element of a household device. The shaft 12 is connected to a rotor 14. The rotor 14 is driven by a stator 16, which is provided with an electrical current via an electrical power circuit 18. The stator 16 is fixed to a housing 20 encapsulating the rotor 14 and the stator 16. The housing 20 supports by means of suitable bearings 22 the shaft 12.

The housing 20 comprises at a comparatively geodetically high position a cavity 24, which receives a temperature sensor 26 completely. The cavity 24 and the temperature sensor 26 are arranged centrally with respect to the rotor 14 and the stator 16. The cavity can be filled with an epoxy resin for protecting the temperature sensor 26 and for gluing the temperature sensor 26 to the housing 20 in a manner that provides a good thermal contact between the temperature sensor 26 and the housing 20. The temperature sensor 26 is connected with an evaluation unit 28, where the detected temperature is compared with a maximum allowed predefined temperature threshold. The temperature sensor 26 is provided inside the housing 20 between an outer surface 36 and an inner surface 38 of the housing 20.

Further a cutoff element 30 is connected to the electrical power circuit 18 for determining whether a maximum allowed predefined applied current of the electrical power circuit 18 is exceeded. The cutoff element 30 as well as the temperature sensor 26 are connected to an OR-logic element 32, which can interrupt the electrical power circuit 18 or limit the current of the electrical power circuit 18 for instance by a not illustrated switch in the case that the cutoff element 30 detects a too high current and/or the temperature sensor 26 detects a too high temperature.

A control unit 34 may be connected to the electrical power circuit 18. By means of the control unit 34 an intended speed or torque of the shaft 12 can be controlled and/or the applied power can be changed in accordance to an adjustment of a user.

While the invention has been illustrated and described in detail in the drawings and foregoing description, such illustration and description are to be considered illustrative or exemplary and not restrictive; the invention is not limited to the disclosed embodiments. For example, it is possible to operate the invention in an embodiment wherein more than one temperature sensor 26 is provided at different places of the motor 10, where the real temperature of the rotor 14 and/or the stator 16 can be easily calculated. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. This computer program may be used to operate the control unit 34 and/or to change values of the evaluation unit 28 and/or the cutoff element 30. Any reference signs in the claims should not be construed as limiting the scope.

## Claims

1. Motor particularly for household devices, comprising
a housing (20) for housing a rotor (14) and a stator (16),
an electrical power circuit (18) for applying an electrical power to the stator (16) and/or the rotor (14),
a cutoff element (30) for interrupting or limiting the electrical power circuit (18), if an current applied to the electrical power circuit (18) exceeds a predefined current threshold, and
a temperature sensor (26) for detecting the temperature of the housing (20),
wherein the temperature sensor (26) is connected to the electrical power circuit (18) such that the electrical power circuit (18) is interrupted or limited, if the temperature of the housing (20) exceeds a predefined temperature threshold.

2. Motor according to claim 1, wherein the temperature threshold is selected such, that a temperature of the rotor (14) and the stator (16) is below a given temperature limit of the rotor (14) and the stator (16), when thermal heat conduction from the stator (16) and the rotor (14) to the temperature sensor (26) via the housing (20) is taken into account.

3. Motor according to claim 2, wherein the selected temperature threshold is based on a calculation calculated at a mainly constant applied electrical power.

4. Motor according to claim 1, wherein the temperature sensor (26) and the cutoff element (30) are connected to the electrical power circuit (18) in an OR-logic manner for interrupting or limiting the electrical power circuit (18).

5. Motor according to claim 4, wherein only one switch (32) is provided for interrupting or limiting the electrical power circuit (18), wherein the switch (32) is particularly operated by an OR-logic element connected to the temperature sensor (26) as well as to the cutoff element (30).

6. Motor according to claim 1, wherein the temperature sensor (26) is in direct contact to the housing (20), wherein the temperature sensor (26) is particularly in plane contact to the housing (20).

7. Motor according to claim 1, wherein the housing (20) comprises a cavity (24) by which the temperature sensor (26) is at least partially received.

8. Motor according to claim 1, wherein the housing (20) comprises an inner surface (38) pointing to the rotor (14) and an outer surface (36) pointing away from the rotor (14), wherein the temperature sensor (26) is placed on the outer surface (36) and/or on the inner surface (38).

9. Motor according to claim 1, wherein the temperature sensor (26) is arranged on the housing (20) at a geodetically higher level than most part of the housing (20).

10. Motor according to claim 1, wherein the temperature sensor (26) is arranged mainly in the middle of the rotor (14) and/or the stator (16) in axial direction and/or arranged mainly in the middle of the rotor (14) and/or the stator (16) in radial direction.

11. Motor according to claim 1, wherein the temperature sensor (26) and the cutoff element (30) are spaced to each other such that during operation of the motor (10) the relation of a heat flux *Q̇_{c}* from the cutoff element (30) to the temperature sensor (26) and a heat flux *Q̇_{M}* from the stator (16) and the rotor (14) to the temperature sensor (26) is *Q̇_{c}*/*Q̇_{M}* ≤ 0.1, particularly *Q̇_{c}*/*Q̇_{M}* ≤ 0.01, preferably *Q̇_{c}*/*Q̇_{M}* ≤ 0.001, and most preferred *Q̇_{c}*/*Q̇_{M}* ≤ 0.0001.

12. Motor according to claim 1, wherein the temperature sensor (26) and/or the cutoff element (30) is/are of a self holding type for interrupting or limiting the electrical power circuit (18) during a predetermined minimum period of time.

13. Household device, particularly hand mixer, food processor or electrical tooth brush, comprising a motor (10) according to claim 1 for operating a moveable part, wherein the applicable electrical power to the motor (10) is particularly variable by a user.

14. Method of operating a motor (10) particularly according to claim 1, wherein an electrical power circuit (18) for operating the motor (10) is interrupted or limited, if an exceeding of a current of the electrical power circuit (18) above a predetermined current threshold is detected, as well as the electrical power circuit (18) is interrupted or limited, if an exceeding of a temperature of a housing (20) for a rotor (14) and a stator (16) of the motor (10) above a predetermined temperature threshold is detected.

15. Method according to claim 13, wherein the temperature threshold is selected such, that a temperature of the stator (16) and the rotor (14) is below a given temperature limit of the rotor (14) and the stator (16), when thermal heat conduction from the stator (16) and the rotor (14) to the temperature sensor (26) via the housing (20) is taken into account, wherein the selected temperature threshold is particularly based on a calculation calculated at a mainly constant applied electrical power.
